# FASCICULE DE BREVET EUROPEEN

(11) **EP 3 386 774 B1**
(45) Date de publication et mention de la délivrance du brevet: **15.07.2020**
(21) Numéro de dépôt: 16825454.8
(22) Date de dépôt: 06.12.2016
(51) Int. Cl.: B60C 11/03, B60C 11/12

(54) **BANDE DE ROULEMENT DE PNEUMATIQUE POUR VEHICULE LOURD DE TYPE GENIE CIVIL**
LAUFFLÄCHE FÜR EINEN REIFEN EINES SCHWEREN BAUFAHRZEUGS
TREAD FOR A TYRE OF A HEAVY CIVIL-ENGINEERING VEHICLE

(30) Priorité: 07.12.2015 FR 1561922
(43) Date de publication de la demande: 17.10.2018
(73) Titulaire: Compagnie Générale des Etablissements Michelin, 63000 Clermont-Ferrand (FR)
(72) Inventeur: BARBARIN, François, 63040 CLERMONT-FERRAND Cedex 9 (FR); DEMAZIERE, Guillaume, 63040 CLERMONT-FERRAND Cedex 9 (FR)
(74) Mandataire: Millanvois, Patrick Jacques Jean
(86) Numéro de dépôt international: PCT/FR2016/053222
(87) Numéro de publication internationale: WO 2017/098132

(56) Documents cités:
- EP-A1- 2 100 753
- EP-A1- 2 308 695
- EP-A1- 2 546 076
- EP-A2- 0 367 557
- EP-A2- 2 583 839
- WO-A1-2013/014253
- WO-A1-2015/114129
- FR-A1- 2 763 892
- JP-A- 2011 000 991
- JP-A- 2014 125 109

## Description

La présente invention a pour objet un pneumatique pour véhicule lourd de type génie civil, destiné à porter de lourdes charges et à rouler sur des sols irréguliers tels que ceux des mines. Cette invention concerne plus particulièrement la bande de roulement d'un tel pneumatique.

Dans le présent document, on désigne par:
- direction radiale : une direction perpendiculaire à l'axe de rotation du pneumatique, correspondant à la direction de l'épaisseur de la bande de roulement.
- direction axiale ou transversale : une direction parallèle à l'axe de rotation du pneumatique.
- direction circonférentielle ou longitudinale: une direction tangente à la circonférence du pneumatique, perpendiculaire à la fois à la direction axiale et à une direction radiale.
- plan équatorial: un plan perpendiculaire à l'axe de rotation du pneumatique divisant la bande de roulement dans sa largeur en deux moitiés d'égales largeurs.

La bande de roulement est la partie de pneumatique comprenant au moins un matériau élastomérique, destinée à entrer en contact avec un sol par l'intermédiaire d'une surface de roulement et à être usée.

Pour assurer une performance satisfaisante en adhérence longitudinale, en motricité et en freinage, et transversale, il est nécessaire de former dans la bande de roulement un système plus ou moins complexe de découpures séparant des éléments en relief, appelé sculpture.

Dans le présent document, une découpure désigne, de manière générique, soit une rainure soit une incision et correspond à l'espace délimité par des parois de matière se faisant face et distantes l'une de l'autre d'une distance dite "largeur de la découpure". Ce qui différencie une incision d'une rainure c'est précisément cette distance. Dans le cas d'une incision, cette distance est appropriée pour permettre la mise en contact au moins partielle des parois opposées délimitant ladite incision au moins lors du passage de la bande de roulement dans le contact avec le sol, lorsque le pneumatique est soumis à des conditions de charge et de pression nominales recommandées. Dans le cas d'une rainure, les parois de cette rainure ne peuvent pas venir en contact l'une avec l'autre dans des conditions normales de roulage.

Par définition, un élément en relief formé dans la bande de roulement, s'étendant dans la direction circonférentielle sur toute la circonférence du pneumatique, est appelée nervure ou rib. Une nervure comprend deux parois latérales et une face de contact, la face de contact étant une partie de la surface de roulement destinée à venir en contact avec le sol pendant le roulage. Une nervure est délimitée par deux découpures circonférentielles ou sillons circonférentiels, sauf si ladite nervure est une portion axialement extérieure de la bande de roulement, délimitée, dans ce cas, d'un seul côté par un sillon circonférentiel.

La bande de roulement comprend ainsi généralement des découpures réparties en sillons circonférentiels (ou longitudinaux), en rainures transversales (ou axiales) et en incisions transversales (ou axiales). Par sillon circonférentiel, on entend un sillon dont le profil moyen forme, avec la direction circonférentielle, un angle au plus égal à 45° : c'est un sillon dont le profil moyen a une direction globalement circonférentielle, c'est-à-dire dont l'inclinaison moyenne est plus proche de la direction circonférentielle que axiale. Par rainure ou incision transversale on entend une découpure dont le profil moyen forme, avec la direction circonférentielle, un angle au moins égal à 45° : c'est une découpure dont le profil moyen a une direction globalement axiale, c'est-à-dire dont l'inclinaison moyenne est plus proche de la direction axiale que circonférentielle. Ainsi une découpure transversale peut être strictement transversale, c'est-à-dire son profil moyen forme, avec la direction circonférentielle, un angle égal à 90°, ou sensiblement oblique, c'est-à-dire son profil moyen forme, avec la direction circonférentielle, un angle strictement inférieur à 90°.

La bande de roulement est généralement caractérisée géométriquement par une largeur axiale W_{T} et une épaisseur radiale H_{T}. La largeur axiale W_{T} est définie comme la largeur axiale de la surface de contact de la bande de roulement du pneumatique neuf avec un sol lisse, le pneumatique étant soumis à des conditions de pression et de charge telles que recommandées, par exemple, par la norme E.T.R.T.O. (European Tyre and Rim Technical Organization). L'épaisseur radiale H_{T} est définie, par convention, comme la profondeur radiale maximale mesurée dans les découpures, le plus souvent dans les sillons circonférentiels. Dans le cas d'un pneumatique pour véhicule lourd de type génie civil, et à titre d'exemple, la largeur axiale W_{T} est au moins égale à 600 mm et l'épaisseur radiale H_{T} est au moins égale à 70 mm.

Le plus souvent, la bande de roulement comprend au moins deux sillons circonférentiels, positionnés axialement de part et d'autre du plan équatorial. Chaque sillon circonférentiel s'étend axialement entre deux faces sensiblement circonférentielles, radialement vers l'intérieur à partir de la surface de roulement jusqu'à une face de fond et circonférentiellement sur toute la circonférence du pneumatique. Chaque sillon circonférentiel, axialement positionné, par rapport au plan équatorial, à une distance axiale L, a une profondeur radiale H, valeur moyenne sur toute la périphérie du pneumatique mesurée entre la surface de roulement et la face de fond, la profondeur radiale H étant au moins égale à 70% de l'épaisseur radiale H_{T} et au plus égale à l'épaisseur radiale H_{T}. Chaque sillon circonférentiel a également une largeur axiale W, valeur moyenne sur la profondeur radiale H de la distance mesurée entre les deux faces sensiblement circonférentielles du sillon circonférentiel.

La bande de roulement peut être divisée en une portion médiane ayant une largeur axiale W_{C} au moins égale à 50% et au plus égale à 80% de la largeur totale W_{T}, généralement mais pas nécessairement délimitée axialement par les deux sillons circonférentiels les plus axialement extérieurs, et deux portions latérales positionnées respectivement de part et d'autre de la portion médiane et ayant chacune une largeur axiale Ws au moins égale à 10% et au plus égale à 25% de la largeur totale W_{T}. En effet, la portion médiane et les portions latérales sont soumises à des sollicitations mécaniques sensiblement différentes pouvant impliquer des choix de conception différents d'une portion à l'autre, notamment du fait d'une importante variation de la charge appliquée au pneumatique lors de l'usage, selon que le véhicule est à vide ou en charge.

Les conditions usuelles de roulage, en termes de pression, de charge et de vitesse, d'un pneumatique pour véhicule lourd de type génie civil, tel que, par exemple, un dumper destiné au transport de matériaux extraits de carrières ou de mines de surface, sont particulièrement sévères. A titre d'exemple, sur les sites d'extraction de matériaux, tels que des minerais ou du charbon, l'usage d'un véhicule de type dumper consiste, de manière simplifiée, en une alternance de cycles aller en charge et de cycles retour à vide. Lors d'un cycle aller en charge, le véhicule chargé transporte, principalement en montée, les matériaux extraits depuis des zones de chargement au fond de la mine, ou fond du « pit », jusqu'à des zones de déchargement : ce qui nécessite une bonne adhérence en motricité des pneumatiques. Lors d'un cycle retour à vide, le véhicule à vide retourne, principalement en descente, vers les zones de chargement au fond de la mine : ce qui nécessite une bonne adhérence en freinage des pneumatiques. Les pistes le plus souvent en pente sont également souvent virageuses, ce qui nécessite une bonne adhérence transversale des pneumatiques. En outre les pistes sur lesquelles roulent les véhicules sont constituées de matériaux en général issus de la mine, par exemple, des roches concassées, compactées et régulièrement arrosées pour garantir la tenue de la couche d'usure de la piste lors du passage des véhicules et sont souvent recouvertes de boue et d'eau : ce qui nécessite une évacuation de ce mélange de boue et d'eau par la bande de roulement, pour garantir une adhérence satisfaisante sur sol boueux.

Il est connu que l'adhérence d'un pneumatique dépend, en particulier, du nombre de découpures de la bande de roulement et, plus particulièrement, de la longueur cumulée des arêtes efficaces de ces découpures dans la surface de contact de la bande de roulement avec le sol. Toute découpure comprend deux arêtes, une arête étant l'intersection d'une face de découpure avec la surface de roulement. Par arête efficace, on entend une arête qui a un effet d'indentation significatif par rapport au sol. A titre d'exemple, concernant les découpures transversales, une seule arête est véritablement efficace vis-à-vis de l'adhérence longitudinale : l'arête dite d'attaque, entrant dans la surface de contact en premier, vis-à-vis de l'adhérence longitudinale en motricité, et l'arête dite de fuite, entrant dans la surface de contact en dernier, vis-à-vis de l'adhérence longitudinale en freinage. Ainsi la moitié des arêtes est efficace en fonction du type de sollicitation de la bande de roulement, par exemple longitudinalement, sous couple moteur ou freineur, ou transversalement. Par conséquent la longueur cumulée des arêtes efficaces est égale à la demi-longueur cumulée de l'ensemble des arêtes ou à la longueur cumulée des fibres moyennes des découpures.

Le document WO2013/014253-A1 montre une bande qui ne remplit pas les conditions exigées par l'invention quant aux taux d'arêtes.

Ainsi deux types de caractéristiques de la bande de roulement sont souvent utilisés : les taux d'entaillement volumiques respectivement global TE_{G}, longitudinal TE_{X} et transversal TE_{Y} et les taux d'arêtes respectivement longitudinal TA_{X} et transversal TA_{Y}.

Par définition, le taux d'entaillement volumique global TE_{G} de la bande de roulement est égal au rapport entre le volume total V_{D} des découpures, mesuré sur le pneumatique libre c'est-à-dire non monté et non gonflé, et la somme du volume total V_{D} des découpures et du volume total V_{R} des éléments en relief délimités par ces découpures. La somme V_{D}+V_{R} correspond au volume compris radialement entre la surface de roulement et une surface de fond, translatée de la surface de roulement radialement vers l'intérieur d'une distance radiale égale à l'épaisseur radiale H_{T} de la bande de roulement. Ce taux d'entaillement volumique global TE_{G}, exprimé en %, conditionne la performance en usure, par le volume de gomme à user disponible, et la performance en adhérence longitudinale et transversale, par la présence d'arêtes respectivement transversales et longitudinales et de découpures ayant la capacité de stocker ou d'évacuer l'eau ou la boue.

Le taux d'entaillement volumique global TE_{G} peut être décomposé en la somme d'un taux d'entaillement volumique longitudinal TE_{X} et d'un taux d'entaillement volumique transversal TE_{Y}. Le taux d'entaillement volumique longitudinal TE_{X} est égal au rapport entre le volume total V_{DX} des découpures longitudinales, de type sillons circonférentiels, et la somme du volume total V_{D} des découpures et du volume total V_{R} des éléments en relief délimités par ces découpures : il conditionne les performances en usure, en thermique et en adhérence transversale. Le taux d'entaillement volumique transversal TE_{Y} est égal au rapport entre le volume total V_{DY} des découpures transversales, de types incisions et rainures, et la somme du volume total V_{D} des découpures et du volume total V_{R} des éléments en relief délimités par ces découpures: il conditionne les performances en usure, en thermique et en adhérence longitudinale.

Un taux d'entaillement volumique peut également être déterminé pour une portion de la bande de roulement pour évaluer la contribution de cette portion à la performance en usure et en adhérence. Ainsi on peut définir, pour la portion médiane de la bande de roulement, un taux d'entaillement volumique médian TE_{C}, égal au rapport entre le volume total V_{DC} des découpures de la portion médiane et la somme du volume total V_{DC} des découpures de la portion médiane et du volume total V_{RC} des éléments en relief de la portion médiane délimités par ces découpures. La somme V_{DC}+V_{RC} correspond au volume de la portion médiane compris radialement entre la surface de roulement et une surface de fond, translatée de la surface de roulement radialement vers l'intérieur d'une distance radiale égale à l'épaisseur radiale H_{T} de la bande de roulement. De façon analogue, on peut définir, pour chaque portion latérale, un taux d'entaillement volumique latéral TE_{S}, égal au rapport entre le volume total V_{DS} des découpures de la portion latérale et la somme du volume total V_{DS} des découpures de la portion latérale et du volume total V_{RS} des éléments en relief de la portion latérale délimités par ces découpures. La somme V_{DS}+V_{RS} correspond au volume de la portion latérale compris radialement entre la surface de roulement et une surface de fond, translatée de la surface de roulement radialement vers l'intérieur d'une distance radiale égale à l'épaisseur radiale H_{T} de la bande de roulement. Il est à noter que le volume d'un sillon circonférentiel délimitant la portion médiane et une portion latérale est pris en compte pour moitié dans le calcul du taux d'entaillement volumique médian TE_{C} et pour moitié dans le calcul du taux d'entaillement volumique latéral TE_{S}.

Concernant les taux d'arêtes, le taux d'arêtes longitudinal TA_{X} est le rapport L_{X}/S, entre la somme L_{X} des projections, sur la direction circonférentielle XX', des longueurs d'arêtes efficaces, contenues dans une portion élémentaire de surface de roulement non entaillée ayant un surface S, et la surface S. Le taux d'arêtes longitudinal TA_{X} ne prend pas en compte les arêtes des extrémités axiales de la bande de roulement. La portion élémentaire de surface de roulement correspond classiquement à un motif élémentaire dont la répétition selon la direction circonférentielle constitue la surface de roulement. Le taux d'arêtes longitudinal TA_{X}, exprimé en m⁻¹, conditionne l'adhérence transversale, qui est d'autant meilleure que le taux d'arêtes longitudinal TA_{X} est élevé. De façon analogue, le taux d'arêtes transversal TA_{Y} est le rapport L_{Y}/S, entre la somme L_{Y} des projections, sur la direction axiale YY', des longueurs d'arêtes efficaces, contenues dans une portion de surface de roulement ayant une surface S, et la surface S. Le taux d'arêtes transversal TA_{Y}, exprimé en m⁻¹, conditionne l'adhérence longitudinale, en freinage et en motricité, qui est d'autant meilleure que le taux d'arêtes transversal TA_{Y} est élevé.

Les inventeurs se sont donnés pour objectif de concevoir une bande de roulement d'un pneumatique pour véhicule lourd de type génie civil, permettant d'améliorer l'adhérence longitudinale, à la fois en motricité et en freinage, et l'adhérence transversale, lors de l'utilisation sur des pistes pouvant être recouvertes d'eau et de boue, en garantissant un compromis satisfaisant avec les performances en usure et en endurance thermique.

Cet objectif a été atteint par un pneumatique pour véhicule lourd de type génie civil comprenant une bande de roulement, destinée à entrer en contact avec un sol par l'intermédiaire d'une surface de roulement:
- la bande de roulement ayant une largeur axiale W_{T} et ayant une épaisseur radiale H_{T} au moins égale à 70 mm,
- la bande de roulement comprenant des découpures réparties, selon une direction circonférentielle du pneumatique, en sillons circonférentiels et, selon une direction axiale du pneumatique, en incisions transversales et en rainures transversales,
- les découpures délimitant des éléments en relief,
- chaque découpure étant délimitée par deux faces en regard l'une de l'autre et chaque face coupant la surface de roulement selon une arête,
- pour chaque découpure délimitée, dans la surface de roulement, par deux arêtes, une seule des deux arêtes étant une arête efficace, c'est-à-dire avec un effet d'indentation significatif par rapport au sol vis-à-vis de l'adhérence, pour un type de sollicitation de la bande de roulement donné,
- la bande de roulement ayant un taux d'arêtes longitudinal TA_{X} et un taux d'arêtes transversal TA_{Y},
- le taux d'arêtes longitudinal TA_{X} étant égal au rapport L_{X}/S entre la somme L_{X} des projections, sur la direction circonférentielle, des longueurs d'arêtes efficaces, contenues dans une portion élémentaire de surface de roulement ayant une surface S, et la surface S,
- le taux d'arêtes transversal TA_{Y} étant égal au rapport L_{Y}/S entre la somme L_{Y} des projections, sur la direction axiale, des longueurs d'arêtes efficaces, contenues dans une portion élémentaire de surface de roulement ayant une surface S, et la surface S,
- le taux d'arêtes longitudinal TA_{X} étant au moins égal à 4 m⁻¹ et le taux d'arêtes transversal TA_{Y} étant au moins égal à 6 m⁻¹.

En d'autres termes, selon l'invention, une portion de surface de roulement de 1 m² comprend 4 m de longueur cumulée d'arêtes efficaces selon la direction circonférentielle, et 6 m de longueur cumulée d'arêtes efficaces selon la direction axiale. La combinaison de tels taux d'arêtes longitudinal TA_{X}, respectivement transversal TA_{Y}, garantit une bonne adhérence transversale et longitudinale sur un sol mouillé ou sur un sol recouvert d'une boue liquide ou d'un mélange de neige et de glace.

Avantageusement le taux d'arêtes transversal TA_{Y} est au moins égal à 8 m⁻¹, de préférence au moins égal à 10 m⁻¹.

Encore avantageusement la somme du taux d'arêtes longitudinal TA_{X} et du taux d'arêtes transversal TA_{Y} est au moins égale à 12 m⁻¹, de préférence au moins égale à 14 m⁻¹.

Avantageusement, le taux d'entaillement volumique global TE_{G} est au moins égal à 8% et au plus égal à 17%, de préférence au plus égal à 15%, le taux d'entaillement volumique longitudinal TE_{X} est au moins égal à 0.25 fois et au plus égal à 0.50 fois le taux d'entaillement volumique global TE_{G} et le taux d'entaillement volumique transversal TE_{Y} est au moins égal à 0.50 fois et au plus égal à 0.75 fois le taux d'entaillement volumique global TE_{G}.

Le taux d'entaillement volumique global TE_{G} doit avoir une valeur minimale, pour garantir la présence d'un minimum d'arêtes et de creux vis-à-vis de l'adhérence, et doit avoir une valeur maximale, pour garantir des rigidités transversale et longitudinale de la bande de roulement suffisantes pour la transmission au sol des efforts transversaux et longitudinaux et pour garantir un volume suffisant de matière à user. Les inventeurs ont également montré que le taux d'entaillement volumique global TE_{G} doit avantageusement se décomposer entre un taux d'entaillement volumique longitudinal TE_{X}, selon la direction circonférentielle XX', compris entre le quart et la moitié du taux d'entaillement volumique global TE_{G}, et un taux d'entaillement volumique transversal TE_{Y}, selon la direction axiale YY', compris entre la moitié et les trois quarts du taux d'entaillement volumique global TE_{G}.

La bande de roulement comprend une portion médiane ayant une largeur axiale W_{C} au moins égale à 50% et au plus égale à 80% de la largeur totale W_{T} et deux portions latérales axialement positionnées respectivement de part et d'autre de la portion médiane et ayant chacune une largeur axiale Ws au moins égale à 10% et au plus égale à 25% de la largeur totale W_{T}. La portion médiane et chaque portion latérale ont respectivement un taux d'entaillement volumique médian TE_{C} et un taux d'entaillement volumique latéral TE_{S}. Le taux d'entaillement volumique médian TE_{C} est égal au rapport entre le volume total V_{DC} des découpures de la portion médiane et la somme du volume total V_{DC} des découpures de la portion médiane et du volume total V_{RC} des éléments en relief de la portion médiane délimités par ces découpures. Le taux d'entaillement volumique latéral TE_{S} est égal au rapport entre le volume total V_{DS} des découpures de la portion latérale et la somme du volume total V_{DS} des découpures de la portion latérale et du volume total V_{RS} des éléments en relief de la portion latérale délimités par ces découpures. Il est à noter que le volume d'un sillon circonférentiel délimitant la portion médiane et une portion latérale est pris en compte pour moitié dans le calcul du taux d'entaillement volumique médian TE_{C} et pour moitié dans le calcul du taux d'entaillement volumique latéral TE_{S}. Encore avantageusement, le taux d'entaillement volumique médian TE_{C} est au moins égal à 8% et au plus égal à 13% et le taux d'entaillement volumique latéral TE_{S} est au moins égal à 19% et au plus égal à 25%.

Ces caractéristiques traduisent, en particulier, le fait que le volume des découpures est plus élevé dans les parties latérales que dans la partie médiane. Ceci permet de favoriser l'évacuation de la boue par les parties latérales, et donc l'adhérence sur sol boueux. Ceci garantit également la présence d'un maximum de matière au centre, ce qui est favorable à la résistance à l'usure.

Selon un premier mode de réalisation préféré, la bande de roulement comprenant au moins deux sillons circonférentiels, positionnés axialement de part et d'autre d'un plan équatorial passant par le milieu de la bande de roulement et perpendiculaire à l'axe de rotation du pneumatique, chaque sillon circonférentiel s'étendant axialement entre deux faces sensiblement circonférentielles, radialement vers l'intérieur à partir de la surface de roulement jusqu'à une face de fond et circonférentiellement sur toute la circonférence du pneumatique, chaque sillon circonférentiel étant axialement positionné par rapport au plan équatorial à une distance axiale L, ayant une largeur axiale W, mesurée entre les deux faces sensiblement circonférentielles, et une profondeur radiale H, mesurée entre la surface de roulement et la face de fond, la profondeur radiale H étant au moins égale à 70% de l'épaisseur radiale H_{T} et au plus égale à l'épaisseur radiale H_{T}, chaque sillon circonférentiel a une largeur axiale W et une profondeur radiale H, de telle sorte que le rapport W/H est au moins égal à 0.06, la distance axiale C entre deux sillons circonférentiels consécutifs est au moins égale à 12% et au plus égale à 21% de la largeur axiale W_{T} de la bande de roulement et chacun des sillons circonférentiels axialement les plus extérieurs est positionné axialement, par rapport au plan équatorial, à une distance axiale L_{E} au moins égale à 25% de la largeur axiale W_{T} de la bande de roulement.

La première caractéristique selon laquelle chaque sillon circonférentiel a une largeur axiale W et une profondeur radiale H, de telle sorte que le rapport W/H est au moins égal à 0.06 traduit le fait que chaque sillon circonférentiel doit être suffisamment large pour avoir une action significative sur le refroidissement de la portion de sommet à l'aplomb du sillon circonférentiel. La largeur axiale W est la valeur moyenne des distances entre les faces sensiblement circonférentielles du sillon circonférentiel, calculée sur la profondeur radiale H du sillon circonférentiel. La profondeur radiale H est la valeur moyenne des distances entre la face de fond du sillon circonférentiel et la surface de roulement, calculée sur toute la circonférence du pneumatique. Le volume de matière au-dessus du point chaud est ainsi minimisé et le volume du sillon garantit une ventilation efficace et de meilleurs échanges thermiques entre le sommet du pneumatique et l'air extérieur.

La deuxième caractéristique selon laquelle la distance axiale C entre deux sillons circonférentiels consécutifs est au moins égale à 12% et au plus égale à 21% de la largeur axiale W_{T} de la bande de roulement signifie qu'il doit y avoir un nombre suffisant de sillons circonférentiels pour garantir le refroidissement du sommet, mais un nombre pas trop élevé pour ne pas pénaliser le volume de matière à user. La distance axiale C entre deux sillons circonférentiels consécutifs, appelée également pas axial des sillons circonférentiels, est mesurée entre les surfaces moyennes respectives des sillons circonférentiels.

Enfin, la troisième caractéristique selon laquelle chacun des sillons circonférentiels axialement les plus extérieurs est positionné axialement, par rapport au plan équatorial, à une distance axiale L_{E} au moins égale à 25% de la largeur axiale W_{T} de la bande de roulement implique que les sillons circonférentiels les plus axialement extérieurs sont axialement positionnés sensiblement à l'aplomb des extrémités des couches de travail. Ces zones sont en effet des points chauds particulièrement sensibles desquels peuvent partir des fissures susceptibles d'entraîner la déchéance mécanique du sommet.

En résumé, le principe de ce premier mode de réalisation préféré est d'avoir un nombre suffisant de sillons circonférentiels suffisamment larges et axialement positionnés à l'aplomb des points chauds du sommet, pour diminuer les températures au niveau de ces points chauds.

Avantageusement, dans ce premier mode de réalisation, le rapport W/H est au plus égal à 0.15. Cette valeur maximale du rapport W/H garantit un volume de matière à user suffisant. De plus, elle autorise encore la fermeture du sillon circonférentiel au passage dans la surface de contact, ce qui garantit une bande de roulement suffisamment compacte et rigide pour la reprise des efforts transversaux appliqués sur le pneumatique.

Encore avantageusement, dans ce premier mode de réalisation, la distance axiale L_{E} est au moins égale à 30%, de préférence au moins égale à 35% de la largeur axiale W_{T} de la bande de roulement. Cette distance minimale garantit le positionnement axial des sillons circonférentiels les plus axialement extérieurs à l'aplomb des extrémités des couches de travail, qui sont des points chauds du sommet du pneumatique.

Il est également avantageux que, dans ce premier mode de réalisation, la distance axiale L_{E} soit au plus égale à 40% de la largeur axiale W_{T} de la bande de roulement. Cette distance maximale garantit la présence d'une portion latérale de bande de roulement suffisamment large, donc suffisamment résistante aux arrachements.

Enfin, dans ce premier mode de réalisation, la distance axiale C entre deux sillons circonférentiels consécutifs est avantageusement au moins égale à 150% et au plus égale à 200% de l'épaisseur radiale H_{T}. Cette caractéristique traduit le fait que le nombre de sillons circonférentiels dépend également de la profondeur desdits sillons circonférentiels. Ainsi, le nombre de sillons doit être suffisant pour garantir le refroidissement, mais pas trop élevé pour avoir une rigidité suffisante des éléments en relief délimités par deux sillons circonférentiels consécutifs.

Selon une variante de réalisation avantageuse de l'invention, la bande de roulement comprend avantageusement au moins quatre sillons circonférentiels, de préférence au moins cinq sillons circonférentiels. Ce nombre minimal de sillons circonférentiels permet un compromis satisfaisant entre un refroidissement efficace et un volume de matière à user suffisant.

Selon une autre variante de réalisation avantageuse de l'invention, la bande de roulement comprend encore plus avantageusement au plus huit sillons circonférentiels. Au-delà de huit sillons circonférentiels, la bande de roulement est trop découpée, donc plus fragile mécaniquement et insuffisante en terme de volume de matière à user.

Selon un deuxième mode de réalisation préféré, la bande de roulement comprenant une portion médiane ayant une largeur axiale W_{C} au moins égale à 50% et au plus égale à 80% de la largeur axiale W_{T} et deux portions latérales axialement positionnées respectivement de part et d'autre de la portion médiane et ayant chacune une largeur axiale W_{S} au moins égale à 10% et au plus égale à 25% de la largeur axiale W_{T}, la bande de roulement étant telle que la portion médiane comprend des incisions transversales débouchant dans les sillons circonférentiels, ces incisions transversales ayant une profondeur radiale H1 au moins égale à 70% de l'épaisseur radiale H_{T} et délimitant des éléments en relief de hauteur égale à la profondeur radiale H1 desdites incisions transversales et de longueur circonférentielle B1 égale à la distance moyenne entre deux incisions transversales consécutives, pour tous les éléments en relief délimités par deux incisions transversales consécutives de la portion médiane, le rapport H1/B1 est au moins égal à 0.5 et au plus égal à 2.5.

Par convention, la portion médiane a une largeur axiale W_{C} au moins égale à 50% et au plus égale à 80% de la largeur axiale W_{T} et est généralement mais pas nécessairement délimitée axialement par les deux sillons circonférentiels les plus axialement extérieurs. Les nervures circonférentielles de ladite portion médiane sont ainsi incisées sur toute la circonférence du pneumatique. Deux incisions consécutives délimitent un élément en relief ayant une hauteur radiale H1, correspondant à la profondeur radiale H1 des incisions, et une longueur circonférentielle B1, correspondant à la distance circonférentielle ou pas circonférentiel entre deux incisions consécutives.

La localisation de ces incisions dans la portion médiane de la bande de roulement est justifiée par le fait que cette portion médiane supporte la quasi-totalité de la charge appliquée sur le pneumatique, lorsque le véhicule sur lequel il est monté roule à vide. Ce principe d'incision de la portion médiane permet ainsi de diminuer l'usure du pneumatique, en particulier lors des phases de roulage du véhicule à vide. En outre, les arêtes de ces incisions transversales, c'est-à-dire l'intersection des faces des incisions avec la surface de roulement, contribuent à une meilleure adhérence longitudinale du pneumatique, aussi bien en motricité qu'en freinage.

Selon un troisième mode de réalisation préféré, la bande de roulement comprenant une portion médiane ayant une largeur axiale W_{C} au moins égale à 50% et au plus égale à 80% de la largeur axiale W_{T} et deux portions latérales axialement positionnées respectivement de part et d'autre de la portion médiane et ayant chacune une largeur axiale W_{S} au moins égale à 10% et au plus égale à 25% de la largeur axiale W_{T}, la bande de roulement étant telle qu'au moins une portion latérale comprend des découpures transversales, de types incision transversale et rainure transversale, débouchant d'un côté dans un sillon circonférentiel et de l'autre dans une extrémité axiale de la bande de roulement, ces découpures transversales ayant une profondeur radiale H2 au moins égale à 70% de l'épaisseur radiale H_{T} et délimitant des éléments en relief de hauteur égale à la profondeur radiale H2 desdites découpures transversales et de longueur circonférentielle B2 égale à la distance moyenne entre deux découpures transversales consécutives, pour tous les éléments en relief délimités par deux découpures transversales consécutives d'au moins une portion latérale, le rapport H2/B2 est au moins égal à 0.5 et au plus égal à 2.5.

Dans ce troisième mode de réalisation préféré, le principe des découpures transversales à un pas compris dans un intervalle donné est appliqué à au moins une portion latérale, le plus souvent aux deux portions latérales de la bande de roulement, positionnées axialement de part et d'autre de la portion médiane. Chaque portion latérale a une largeur axiale W_{S} au moins égale à 10% et au plus égale à 25% de la largeur axiale W_{T}, cette largeur axiale W_{S} n'étant pas nécessairement identique pour chacune des portions latérales. En effet les portions latérales participent au port de la charge, avec la portion médiane, lorsque le véhicule roule en charge. Grâce aux découpures transversales de type incision transversale, cette variante permet donc de diminuer l'usure des parties latérales de la bande roulement, lors des phases de roulage en charge du véhicule. En outre, les arêtes de ces incisions transversales, c'est-à-dire l'intersection des faces des incisions avec la surface de roulement, contribuent à une meilleure adhérence longitudinale du pneumatique, aussi bien en motricité qu'en freinage. Grâce aux découpures transversales de type rainure transversale, cette variante permet de diminuer la température de parties latérales de la bande roulement et donc d'améliorer l'endurance thermique du sommet, lors des phases de roulage en charge du véhicule.

Selon une variante du troisième mode de réalisation préféré, au moins une portion latérale comprend une alternance d'incisions transversales et de rainures transversales de telle sorte que tout élément en relief est délimité par une incision transversale et une rainure transversale consécutives. Préférentiellement, chaque portion latérale comprend une alternance d'incisions transversales et de rainures transversales.

Les caractéristiques de l'invention sont illustrées par les figures 1A, 1B, 1C, 2A, 2B, 3A, 3B, 3C, 4A, 4B et 4C schématiques et non représentées à l'échelle :
-figure 1A: vue de dessus d'une bande de roulement d'un pneumatique selon l'invention,
-figure 1B: coupe méridienne, selon un plan méridien AA, d'une bande de roulement d'un pneumatique selon l'invention,
-figure 1C: coupe circonférentielle, selon un plan circonférentiel BB, d'une bande de roulement d'un pneumatique selon l'invention,
-figure 2A: vue de dessus d'une bande de roulement d'un pneumatique selon un mode de réalisation préféré des sillons circonférentiels,
-figure 2B : coupe méridienne, selon un plan méridien YZ, d'une bande de roulement d'un pneumatique selon un mode de réalisation préféré des sillons circonférentiels,
--figure 3A: vue de dessus d'une bande de roulement d'un pneumatique selon un mode de réalisation préféré des découpures transversales,
-figure 3B: coupe circonférentielle, selon un plan circonférentiel AA, d'une partie médiane de bande de roulement d'un pneumatique selon un mode de réalisation préféré des découpures transversales,
-figure 3C: coupe circonférentielle, selon un plan circonférentiel BB, d'une partie latérale de bande de roulement d'un pneumatique selon un mode de réalisation préféré des découpures transversales,
-figure 4A: domaine de taux d'arêtes respectivement longitudinal TA_{X} et transversal TA_{Y} pour une bande de roulement selon l'invention,
-figure 4B: domaine de taux d'entaillement volumique respectivement longitudinal TE_{X} et transversal TE_{Y} pour une bande de roulement selon l'invention,
-figure 4C: domaine de taux d'entaillement volumique respectivement médian TE_{C} et latéral TE_{S} pour une bande de roulement selon l'invention.

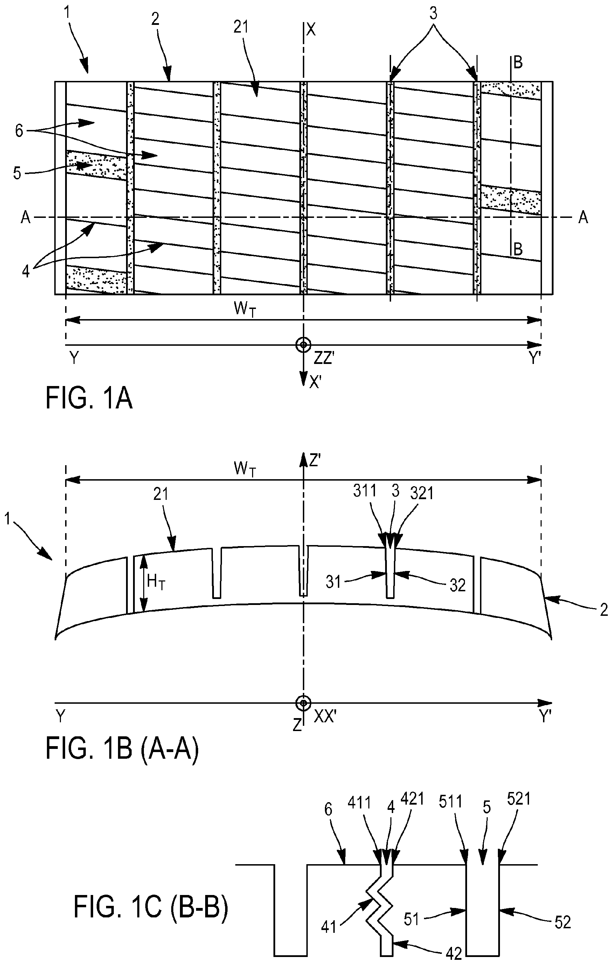

La figure 1A est une vue de dessus d'une bande de roulement 2 d'un pneumatique 1 selon l'invention. La bande de roulement 2, destinée à entrer en contact avec un sol par l'intermédiaire d'une surface de roulement 21, a une largeur axiale W_{T} et une épaisseur radiale H_{T} (non représentée) au moins égale à 70 mm. La bande de roulement 2 comprend des découpures (3, 4, 5) réparties, selon une direction circonférentielle XX' du pneumatique, en 5 sillons circonférentiels 3, dans le cas représenté, et, selon une direction axiale YY' du pneumatique, en incisions transversales 4 et en rainures transversales 5. Les découpures (3, 4, 5) délimitent des éléments en relief 6. La bande de roulement 2 a un taux d'arêtes longitudinal TA_{X} égal au rapport L_{X}/S entre la somme L_{X} des projections, sur la direction circonférentielle XX', des longueurs d'arêtes efficaces, contenues dans une portion élémentaire de surface de roulement ayant une surface S, et la surface S, et un taux d'arêtes transversal TA_{Y} égal au rapport L_{Y}/S entre la somme L_{Y} des projections, sur la direction axiale YY', des longueurs d'arêtes efficaces, contenues dans une portion élémentaire de surface de roulement ayant une surface S, et la surface S. Il est usuellement admis que, pour une découpure donnée comprenant deux arêtes, une seule arête est efficace selon la sollicitation envisagée. Ainsi la moitié du nombre d'arêtes est prise en compte pour la détermination de la somme des longueurs des arêtes efficaces, en projection sur la direction circonférentielle XX' ou sur la direction axiale YY'. Selon l'invention, le taux d'arêtes longitudinal TA_{X} est au moins égal à 4 m⁻¹ et le taux d'arêtes transversal TA_{Y} est au moins égal à 6 m⁻¹.

La figure 1B est une coupe méridienne, selon un plan méridien AA, d'une bande de roulement 2 d'un pneumatique 1 selon l'invention, ayant une largeur axiale W_{T} et une épaisseur radiale H_{T}. Elle représente en particulier les profils méridiens des découpures de type sillons circonférentiels 3. Chaque sillon circonférentiel 3 est délimité par deux faces (31, 32) en regard l'une de l'autre. Chaque face (31, 32) coupe la surface de roulement (21) selon une arête (311, 321).

La figure 1C est une coupe circonférentielle, selon un plan circonférentiel BB, d'une bande de roulement 2 d'un pneumatique 1 selon l'invention. Elle représente en particulier, en coupe circonférentielle, les profils circonférentiels des découpures transversales de types incision transversale 4 et rainure transversale 5. Chaque incision transversale 4 est délimitée par deux faces (41, 42) en regard l'une de l'autre, chaque face (41, 42) coupant la surface de roulement (21) selon une arête (411, 421). Dans le cas présenté, les incisions transversales 4 ont un profil complexe de type ondulé, selon la direction radiale ZZ', qui favorise la fermeture des incisions, au passage de la bande de roulement dans l'aire de contact, par un effet autobloquant. Chaque rainure transversale 5 est délimitée par deux faces (51, 52) en regard l'une de l'autre, chaque face (51, 52) coupant la surface de roulement (21) selon une arête (511, 521). Dans le cas présenté, les rainures transversales 5 ont un profil rectiligne, selon la direction radiale ZZ', dont la largeur garantit l'absence de fermeture de la rainure 5, c'est-à-dire de l'entrée en contact de ses faces (511, 521), au passage de la bande de roulement dans l'aire de contact.

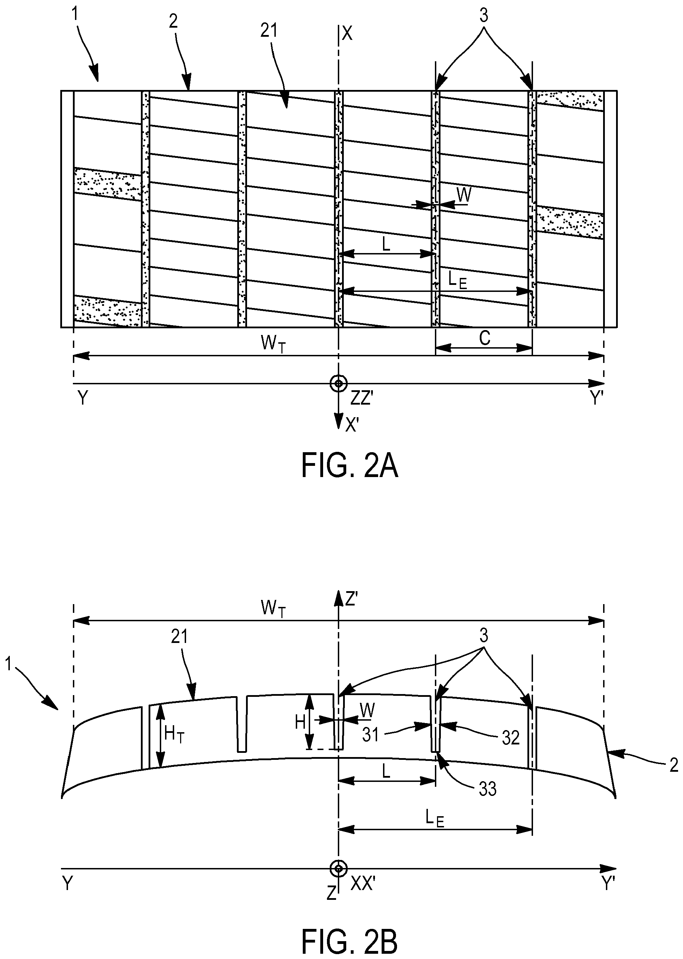

La figure 2A est une vue de dessus d'une bande de roulement 2 d'un pneumatique 1 selon un mode de réalisation préféré des sillons circonférentiels. La bande de roulement 2, destinée à entrer en contact avec un sol par l'intermédiaire d'une surface de roulement 21, a une largeur axiale W_{T} et une épaisseur radiale H_{T} (non représentée) au moins égale à 70 mm. La bande de roulement 2, dans le cas représenté, comprend 5 sillons circonférentiels 3, positionnés axialement de part et d'autre d'un plan équatorial XZ passant par le milieu de la bande de roulement et perpendiculaire à l'axe de rotation YY' du pneumatique. Chaque sillon circonférentiel 3 est axialement positionné par rapport au plan équatorial XZ à une distance axiale L et a une largeur axiale W, selon l'axe YY', et une profondeur radiale H (non représentée), selon l'axe ZZ', la profondeur radiale H étant au moins égale à 70% de l'épaisseur radiale H_{T} et au plus égale à l'épaisseur radiale H_{T}. Selon ce premier mode de réalisation de l'invention, chaque sillon circonférentiel 3 a une largeur axiale W et une profondeur radiale H, de telle sorte que le rapport W/H est au moins égal à 0.06, la distance axiale C entre deux sillons circonférentiels 3 consécutifs est au moins égale à 12% et au plus égale à 21% de la largeur axiale W_{T} de la bande de roulement et chacun des sillons circonférentiels 3 axialement les plus extérieurs est positionné axialement, par rapport au plan équatorial XZ, à une distance axiale L_{E} au moins égale à 25% de la largeur axiale W_{T} de la bande de roulement.

La figure 2B est une coupe méridienne, dans un plan méridien YZ, d'une bande de roulement 2 d'un pneumatique 1 selon un mode de réalisation préféré des sillons circonférentiels. Cette figure 2B représente en particulier les sillons circonférentiels 3 en coupe méridienne, soit 5 sillons circonférentiels dans le cas présenté. De façon générale un sillon circonférentiel 3 s'étend axialement entre deux faces sensiblement circonférentielles (31, 32), radialement vers l'intérieur à partir de la surface de roulement 21 jusqu'à une face de fond 33 et circonférentiellement sur toute la circonférence du pneumatique. Un sillon circonférentiel 3, axialement positionné par rapport au plan équatorial à une distance axiale L, a une largeur axiale W, mesurée entre les deux faces sensiblement circonférentielles (31, 32), et une profondeur radiale H, mesurée entre la surface de roulement 21 et la face de fond 33. La profondeur radiale H d'un sillon circonférentiel 3 est au moins égale à 70% et au plus égale à 100% de l'épaisseur radiale H_{T}. L'épaisseur radiale H_{T} de la bande de roulement 2 est définie comme la profondeur radiale maximale mesurée dans les découpures, c'est-à-dire, dans le cas présent, entre la surface de roulement 21 et la face de fond 33 du sillon circonférentiel 3 le plus axialement extérieur qui est ici la découpure la plus profonde. L'épaisseur radiale H_{T} est au moins égale à 70 mm.

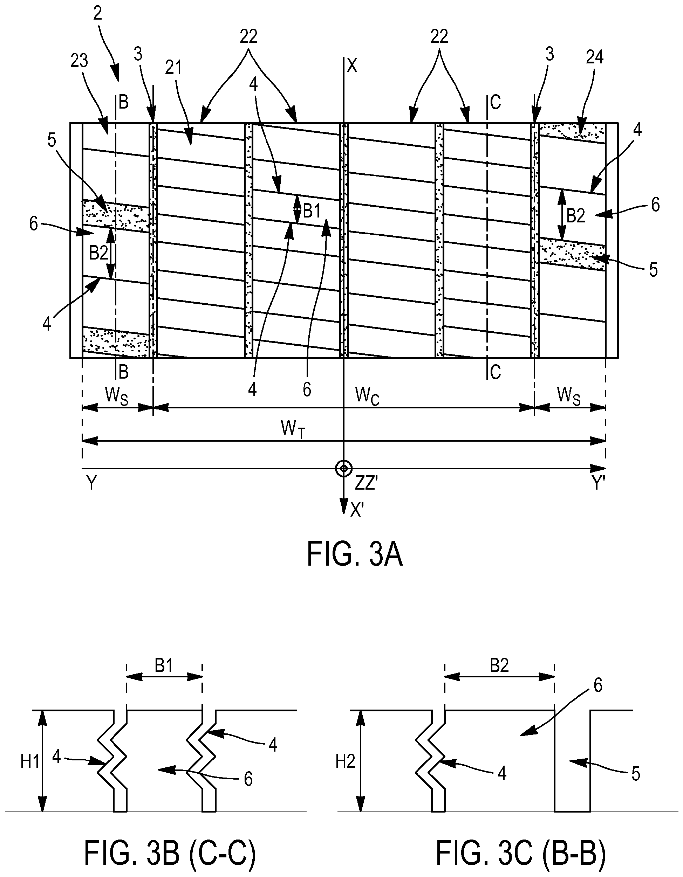

La figure 3A représente une vue de dessus d'une bande de roulement d'un pneumatique selon un mode de réalisation préféré des découpures transversales, dans lequel la bande de roulement 2 comprend une portion médiane 22 ayant une largeur axiale W_{C} au moins égale à 50% et au plus égale à 80% de la largeur axiale W_{T}, délimitée axialement par les deux sillons circonférentiels 3 les plus axialement extérieurs, et deux portions latérales (23, 24) axialement positionnées respectivement de part et d'autre de la portion médiane 22 et ayant chacune une largeur axiale W_{S} au moins égale à 10% et au plus égale à 25% de la largeur axiale W_{T}. La bande de roulement 2 est telle que la portion médiane 22 comprend des incisions transversales 4 débouchant dans les sillons circonférentiels 3. Comme le montre la figure 3B, selon une coupe circonférentielle CC, ces incisions transversales 4 de la portion médiane 22 ont une profondeur radiale H1 au moins égale à 70% de l'épaisseur radiale H_{T} et délimitent des éléments en relief 6 de hauteur égale à la profondeur radiale H1 desdites incisions transversales et de longueur circonférentielle B1 égale à la distance moyenne entre deux incisions transversales 4 consécutives. Pour tous les éléments en relief 6 délimités par deux incisions transversales 4 consécutives de la portion médiane 22, le rapport H1/B1 est au moins égal à 0.5 et au plus égal à 2.5.

Dans le mode de réalisation représenté sur la figure 3A, la bande de roulement 2 est telle que chaque portion latérale (23, 24) comprend une alternance d'incisions transversales 4 et de rainures transversales 5 débouchant d'un côté dans un sillon circonférentiel 3 et de l'autre dans une extrémité axiale de la bande de roulement 2. Comme le montre la figure 3C, selon une coupe circonférentielle BB, une incision transversale 4 et une rainure transversale 5 consécutives ont toutes deux une profondeur radiale H2 au moins égale à 70% de l'épaisseur radiale H_{T} et délimitent un élément en relief 6 de hauteur égale à la profondeur radiale H2 desdites incision et rainure transversales (4, 5) et de longueur circonférentielle B2 égale à la distance moyenne entre une incision transversale 4 et une rainure transversale 5 consécutives. Pour tous les éléments en relief 6 délimités par une incision transversale 4 et une rainure transversale 5 consécutives de chaque portion latérale (23, 24), le rapport H2/B2 est au moins égal à 0.5 et au plus égal à 2.5.

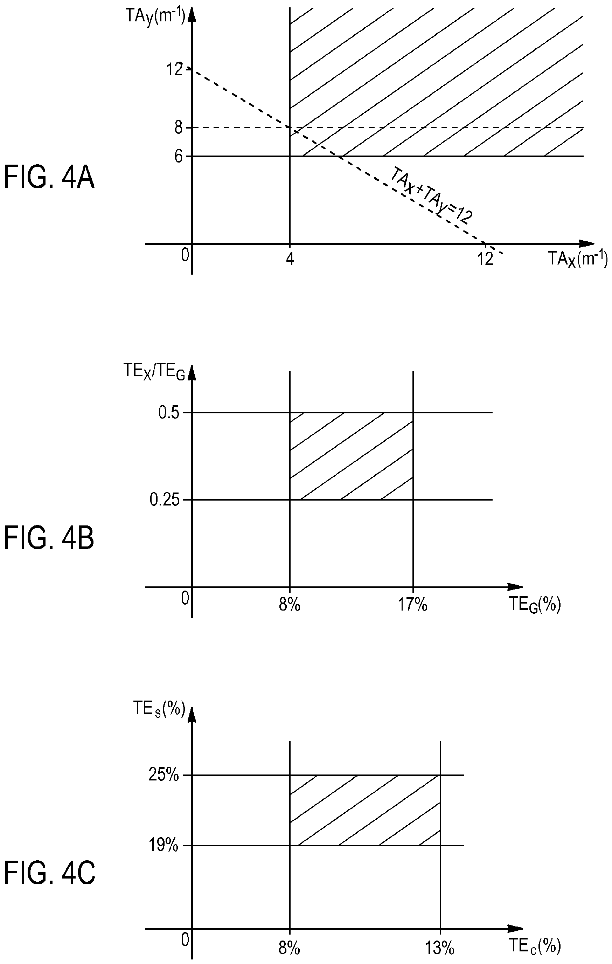

La figure 4A représente le domaine de taux d'arêtes longitudinal TA_{X} en fonction du taux d'arêtes transversal TA_{Y} pour une bande de roulement selon l'invention, caractérisée par un taux d'arêtes longitudinal TA_{X} au moins égal à 4 m⁻¹ et un taux d'arêtes transversal TA_{Y} au moins égal à 6 m⁻¹. Selon un premier mode de réalisation préféré, le taux d'arêtes transversal TA_{Y} est au moins égal à 8 m⁻¹, de préférence au moins égal à 10 m⁻¹. Selon un deuxième mode de réalisation préféré, la somme du taux d'arêtes longitudinal TA_{X} et du taux d'arêtes transversal TA_{Y} est au moins égal à 12 m⁻¹.

La figure 4B représente le domaine du rapport entre le taux d'entaillement longitudinal TE_{X} et le taux d'entaillement volumique global TE_{G} en fonction du taux d'entaillement volumique global TE_{G}, pour un pneumatique I selon l'invention et pour 3 pneumatiques R1, R2 et R3 de l'état de la technique pris en référence. Une bande de roulement selon l'invention est caractérisée par un taux d'entaillement volumique longitudinal TE_{X} au moins égal à 0.25 fois et au plus égal à 0.50 fois le taux d'entaillement volumique global TE_{G} et un taux d'entaillement volumique global TE_{G} au moins égal à 8% et au plus égal à 15%. Pour mémoire le taux d'entaillement volumique global TE_{G} est la somme du taux d'entaillement volumique longitudinal TE_{X}, selon la direction circonférentielle XX, et du taux d'entaillement volumique transversal TE_{Y}, selon la direction axiale YY'.

La figure 4C représente le domaine du taux d'entaillement volumique médian TE_{C} en fonction du taux d'entaillement volumique latéral TE_{S} pour une bande de roulement selon l'invention, caractérisée par un taux d'entaillement volumique médian TE_{C} au moins égal à 8% et au plus égal à 13% et un taux d'entaillement volumique latéral TE_{S} au moins égal à 19% et au plus égal à 25%.

Les inventeurs ont plus particulièrement étudié cette invention pour un pneumatique pour dumper dans les dimensions 40.00R57 et 59/80R63.

Les caractéristiques de bande de roulement pour ces pneumatiques selon l'invention, ainsi que pour un pneumatique de l'état de la technique pris en référence, sont présentées dans le tableau 1 ci-dessous :

**Tableau 1**

| **Dimension du pneumatique** | **40.00R57 XDR2 Michelin (Référence)** | **40.00R57** | **59/80R63** |
|---|---|---|---|
| Largeur axiale W_{T} (mm) | 1000 | 1000 | 1200 |
| Epaisseur radiale H_{T} (mm) | 102 | 108 | 70 |
| Largeur de la zone médiane W_{C} (mm) | 600 | 725 | 883 |
| Taux d'arêtes longitudinal TA_{X} (m⁻¹) | 3.9 | 6.6 | 4.2 |
| Taux d'arêtes transversal TA_{Y} (m⁻¹) | 2.9 | 13.5 | 8.9 |
| Taux d'entaillement volumique global TE_{G} (%) | 19.5 | 13 | 14.8 |
| Taux d'entaillement volumique longitudinal TE_{X} (%) | 2.9 | 4.2 | 4.6 |
| Taux d'entaillement volumique transversal TE_{Y} (%) | 16.6 | 8.8 | 10.2 |
| Taux d'entaillement volumique médian TE_{C} (%) | 15.6 | 10 | 11.8 |
| Taux d'entaillement volumique latéral TE_{S} (%) | 25.5 | 21 | 23.6 |

## Revendications

1. Pneumatique (1) pour véhicule lourd de type génie civil comprenant une bande de roulement (2), destinée à entrer en contact avec un sol par l'intermédiaire d'une surface de roulement (21):
- la bande de roulement (2) ayant une largeur axiale W_{T} et ayant une épaisseur radiale H_{T} au moins égale à 70 mm,
- la bande de roulement (2) comprenant des découpures (3, 4, 5) réparties, selon une direction circonférentielle (XX') du pneumatique, en sillons circonférentiels (3) et, selon une direction axiale (YY') du pneumatique, en incisions transversales (4) et en rainures transversales (5),
- les découpures (3, 4, 5) délimitant des éléments en relief (6),
- chaque découpure (3, 4, 5) étant délimitée par deux faces (31, 32 ; 41, 42; 51, 52) en regard l'une de l'autre et chaque face (31, 32 ; 41, 42; 51, 52) coupant la surface de roulement (21) selon une arête (311, 321 ; 411, 421; 511, 521),
- pour chaque découpure (3, 4, 5) délimitée, dans la surface de roulement (21), par deux arêtes (311, 321 ; 411, 421; 511, 521), une seule des deux arêtes étant une arête efficace, c'est-à-dire avec un effet d'indentation significatif par rapport au sol vis-à-vis de l'adhérence, pour un type de sollicitation de la bande de roulement donné,
- la bande de roulement (2) ayant un taux d'arêtes longitudinal TA_{X} et un taux d'arêtes transversal TA_{Y},
- le taux d'arêtes longitudinal TA_{X} étant égal au rapport L_{X}/S entre la somme L_{X} des projections, sur la direction circonférentielle (XX'), des longueurs d'arêtes efficaces, contenues dans une portion élémentaire de surface de roulement ayant une surface S, et la surface S,
- le taux d'arêtes transversal TA_{Y} étant égal au rapport L_{Y}/S entre la somme L_{Y} des projections, sur la direction axiale (YY'), des longueurs d'arêtes efficaces, contenues dans une portion élémentaire de surface de roulement ayant une surface S, et la surface S, **caractérisé en ce que** le taux d'arêtes longitudinal TA_{X} est au moins égal à 4 m⁻¹ et **en ce que** le taux d'arêtes transversal TA_{Y} est au moins égal à 6 m⁻¹.

2. Pneumatique (1) pour véhicule lourd de type génie civil selon la revendication 1 **dans lequel** le taux d'arêtes transversal TA_{Y} est au moins égal à 8 m⁻¹, de préférence au moins égal à 10 m⁻¹.

3. Pneumatique (1) pour véhicule lourd de type génie civil selon l'une des revendications 1 ou 2 **dans lequel** la somme du taux d'arêtes longitudinal TA_{X} et du taux d'arêtes transversal TA_{Y} est au moins égale à 12 m⁻¹, de préférence au moins égale à 14 m⁻¹.

4. Pneumatique (1) pour véhicule lourd de type génie civil selon l'une quelconque des revendications 1 à 3 :
- la bande de roulement (2) ayant un taux d'entaillement volumique global TE_{G}, égal au rapport entre le volume total V_{D} des découpures (3, 4, 5) et la somme du volume total V_{D} des découpures (3, 4, 5) et du volume total V_{R} des éléments en relief (6) délimités par ces découpures,
- le taux d'entaillement volumique global TE_{G} étant égal à la somme d'un taux d'entaillement volumique longitudinal TE_{X} et d'un taux d'entaillement volumique transversal TE_{Y},
- le taux d'entaillement volumique longitudinal TE_{X} étant égal au rapport entre le volume total V_{DX} des découpures longitudinales, de type sillons circonférentiels (3), et la somme du volume total V_{D} des découpures (3, 4, 5) et du volume total V_{R} des éléments en relief (6) délimités par ces découpures,
- le taux d'entaillement volumique transversal TE_{Y} est égal au rapport entre le volume total V_{DY} des découpures transversales, de types incisions (4) et rainures (5), et la somme du volume total V_{D} des découpures (3, 4, 5) et du volume total V_{R} des éléments en relief (6) délimités par ces découpures,
**dans lequel** le taux d'entaillement volumique global TE_{G} est au moins égal à 8% et au plus égal à 17%, de préférence au plus égal à 15%, **dans lequel** le taux d'entaillement volumique longitudinal TE_{X} est au moins égal à 0.25 fois et au plus égal à 0.50 fois le taux d'entaillement volumique global TE_{G} **et dans lequel** le taux d'entaillement volumique transversal TE_{Y} est au moins égal à 0.50 fois et au plus égal à 0.75 fois le taux d'entaillement volumique global TE_{G}.

5. Pneumatique (1) pour véhicule lourd de type génie civil selon l'une quelconque des revendications 1 à 4:
- la bande de roulement (2) comprenant une portion médiane (22) ayant une largeur axiale W_{C} au moins égale à 50% et au plus égale à 80% de la largeur axiale W_{T} et deux portions latérales (23, 24) axialement positionnées respectivement de part et d'autre de la portion médiane (22) et ayant chacune une largeur axiale Ws au moins égale à 10% et au plus égale à 25% de la largeur axiale W_{T},
- la portion médiane (22) et chaque portion latérale (23, 24) ayant respectivement un taux d'entaillement volumique médian TE_{C} et un taux d'entaillement volumique latéral TE_{S},
- le taux d'entaillement volumique médian TE_{C} étant égal au rapport entre le volume total V_{DC} des découpures (3, 4, 5) de la portion médiane (22) et la somme du volume total V_{DC} des découpures (3, 4, 5) de la portion médiane (22) et du volume total V_{RC} des éléments en relief (6) de la portion médiane (2) délimités par ces découpures,
- le taux d'entaillement volumique latéral TE_{S} étant égal au rapport entre le volume total V_{DS} des découpures (3, 4, 5) de la portion latérale (23, 24) et la somme du volume total V_{DS} des découpures (3, 4, 5) de la portion latérale (23, 24) et du volume total V_{RS} des éléments en relief (6) de la portion latérale (23, 24) délimités par ces découpures,
**dans lequel** le taux d'entaillement volumique médian TE_{C} est au moins égal à 8% et au plus égal à 13% **et dans lequel** le taux d'entaillement volumique latéral TE_{S} est au moins égal à 19% et au plus égal à 25%.

6. Pneumatique (1) pour véhicule lourd de type génie civil selon l'une quelconque des revendications 1 à 5 :
- la bande de roulement (2) comprenant au moins deux sillons circonférentiels (3), positionnés axialement de part et d'autre d'un plan équatorial (XZ) passant par le milieu de la bande de roulement et perpendiculaire à l'axe de rotation (YY') du pneumatique,
- chaque sillon circonférentiel (3) s'étendant axialement entre deux faces sensiblement circonférentielles (31, 32), radialement vers l'intérieur à partir de la surface de roulement (21) jusqu'à une face de fond (33) et circonférentiellement sur toute la circonférence du pneumatique,
- chaque sillon circonférentiel (3) étant axialement positionné par rapport au plan équatorial (XZ) à une distance axiale L, ayant une largeur axiale W, mesurée entre les deux faces sensiblement circonférentielles (31, 32), et une profondeur radiale H, mesurée entre la surface de roulement (21) et la face de fond (33), la profondeur radiale H étant au moins égale à 70% de l'épaisseur radiale H_{T} et au plus égale à l'épaisseur radiale H_{T}, **dans lequel** chaque sillon circonférentiel (3) a une largeur axiale W et une profondeur radiale H, de telle sorte que le rapport W/H est au moins égal à 0.06, **dans lequel** la distance axiale C entre deux sillons circonférentiels (3) consécutifs est au moins égale à 12% et au plus égale à 21% de la largeur axiale W_{T} de la bande de roulement **et dans lequel** chacun des sillons circonférentiels (3) axialement les plus extérieurs est positionné axialement, par rapport au plan équatorial (XZ), à une distance axiale L_{E} au moins égale à 25% de la largeur axiale W_{T} de la bande de roulement.

7. Pneumatique (1) pour véhicule lourd de type génie civil selon la revendication 6 **dans lequel** le rapport W/H est au plus égal à 0.15.

8. Pneumatique (1) pour véhicule lourd de type génie civil selon l'une des revendications 6 ou 7 **dans lequel** la distance axiale L_{E} est au moins égale à 30%, de préférence au moins égale à 35% de la largeur axiale W_{T} de la bande de roulement.

9. Pneumatique (1) pour véhicule lourd de type génie civil selon l'une quelconque des revendications 6 à 8 **dans lequel** la distance axiale L_{E} est au plus égale à 40% de la largeur axiale W_{T} de la bande de roulement.

10. Pneumatique (1) pour véhicule lourd de type génie civil selon l'une quelconque des revendications 6 à 9 **dans lequel** la distance axiale C entre deux sillons circonférentiels (3) consécutifs est au moins égale à 150% et au plus égale à 200% de l'épaisseur radiale H_{T}.

11. Pneumatique (1) pour véhicule lourd de type génie civil selon l'une quelconque des revendications 1 à 10 **dans lequel** la bande de roulement (2) comprend au moins quatre sillons circonférentiels (3), de préférence au moins cinq sillons circonférentiels (3).

12. Pneumatique (1) pour véhicule lourd de type génie civil selon l'une quelconque des revendications 1 à 11 **dans lequel** la bande de roulement (2) comprend au plus huit sillons circonférentiels (3).

13. Pneumatique (1) pour véhicule lourd de type génie civil selon l'une quelconque des revendications 1 à 12,
- la bande de roulement (2) comprenant une portion médiane (22) ayant une largeur axiale W_{C} au moins égale à 50% et au plus égale à 80% de la largeur axiale W_{T} et deux portions latérales (23, 24) axialement positionnées respectivement de part et d'autre de la portion médiane (22) et ayant chacune une largeur axiale Ws au moins égale à 10% et au plus égale à 25% de la largeur axiale W_{T},
- la bande de roulement (2) étant telle que la portion médiane (22) comprend des incisions transversales (4) débouchant dans les sillons circonférentiels (3),
- ces incisions transversales (4) ayant une profondeur radiale H1 au moins égale à 70% de l'épaisseur radiale H_{T} et délimitant des éléments en relief (6) de hauteur égale à la profondeur radiale H1 desdites incisions transversales et de longueur circonférentielle B1 égale à la distance moyenne entre deux incisions transversales (4) consécutives,
**dans lequel,** pour tous les éléments en relief (6) délimités par deux incisions transversales (4) consécutives de la portion médiane (22), le rapport H1/B1 est au moins égal à 0.5 et au plus égal à 2.5.

14. Pneumatique (1) pour véhicule lourd de type génie civil selon l'une quelconque des revendications 1 à 13,
- la bande de roulement (2) comprenant une portion médiane (22) ayant une largeur axiale W_{C} au moins égale à 50% et au plus égale à 80% de la largeur axiale W_{T} et deux portions latérales (23, 24) axialement positionnées respectivement de part et d'autre de la portion médiane (22) et ayant chacune une largeur axiale Ws au moins égale à 10% et au plus égale à 25% de la largeur axiale W_{T},
- la bande de roulement (2) étant telle qu'au moins une portion latérale (23, 24) comprend des découpures transversales (4, 5), de types incision transversale (4) ou rainure transversale (5), débouchant d'un côté dans un sillon circonférentiel (3) et de l'autre dans une extrémité axiale de la bande de roulement (2),
- ces découpures transversales (4, 5) ayant une profondeur radiale H2 au moins égale à 70% de l'épaisseur radiale H_{T} et délimitant des éléments en relief (6) de hauteur égale à la profondeur radiale H2 desdites découpures transversales et de longueur circonférentielle B2 égale à la distance moyenne entre deux découpures transversales (4) consécutives,
**dans lequel,** pour tous les éléments en relief (6) délimités par deux découpures transversales (4, 5) consécutives d'au moins une portion latérale (23, 24), le rapport H2/B2 est au moins égal à 0.5 et au plus égal à 2.5.

15. Pneumatique (1) pour véhicule lourd de type génie civil selon la revendication 14, **dans lequel** au moins une portion latérale (23, 24) comprend une alternance d'incisions transversales (4) et de rainures transversales (5) de telle sorte que tout élément en relief (6) est délimité par une incisions transversale (4) et une rainure transversale (5) consécutives.

## Patentansprüche

1. Reifen (1) für ein schweres Baufahrzeug, umfassend einen Laufstreifen (2), der dazu bestimmt ist, über eine Lauffläche (21) mit einem Boden in Kontakt zu treten:
- wobei der Laufstreifen (2) eine axiale Breite W_{T} aufweist und eine radiale Dicke H_{T}, die mindestens gleich 70 mm ist,
- der Laufstreifen (2) umfassend Ausschnitte (3, 4, 5), die entlang einer Umfangsrichtung (XX') des Reifens in Umfangsfurchen (3) und entlang einer Axialrichtung (YY') des Reifens in Quereinschnitten (4) und in Querrillen (5) verteilt sind,
- wobei die Ausschnitte (3, 4, 5) Reliefelemente (6) begrenzen,
- wobei jeder Ausschnitt (3, 4, 5) von zwei Flächen (31, 32; 41, 42; 51, 52) begrenzt ist, die einander gegenüberliegen, und jede Fläche (31, 32; 41, 42; 51, 52) die Lauffläche (21) entlang einer Kante (311, 321; 411, 421; 511, 521) teilt,
- wobei für jeden Ausschnitt (3, 4, 5), der in der Lauffläche (21) von zwei Kanten (311, 321; 411, 421; 511, 521) begrenzt ist, eine einzige der zwei Kanten eine wirksame Kante, das heißt mit einer maßgeblichen Einzahnungswirkung bezogen auf den Boden in Bezug auf die Haftung, für einen bestimmten Typ von Beanspruchung des Laufstreifens ist,
- wobei der Laufstreifen (2) eine Längskantenrate TA_{X} und eine Querkantenrate TA_{Y} aufweist,
- wobei die Längskantenrate TA_{X} gleich dem Verhältnis L_{X}/S zwischen der Summe L_{X} der Projektionen, in Umfangsrichtung (XX'), der Längen wirksamer Kanten, die in einem elementaren Laufflächenabschnitt mit einer Fläche S enthalten sind, und der Fläche S ist,
- wobei die Querkantenrate TA_{Y} gleich dem Verhältnis L_{Y}/S zwischen der Summe L_{Y} der Projektionen, in Axialrichtung (YY'), der Längen wirksamer Kanten, die in einem elementaren Laufflächenabschnitt mit einer Fläche S enthalten sind, und der Fläche S ist, **dadurch gekennzeichnet, dass** die Längskantenrate TA_{X} mindestens gleich 4 m⁻¹ ist, und dadurch, dass die Querkantenrate TA_{Y} mindestens gleich 6 m⁻¹ ist.

2. Reifen (1) für ein schweres Baufahrzeug nach Anspruch 1, wobei die Querkantenrate TA_{Y} mindestens gleich 8 m⁻¹, vorzugsweise mindestens gleich 10 m⁻¹ ist.

3. Reifen (1) für ein schweres Baufahrzeug nach einem der Ansprüche 1 oder 2, wobei die Summe der Längskantenrate TA_{X} und der Querkantenrate TA_{Y} mindestens gleich 12 m⁻¹, vorzugsweise mindestens gleich 14 m⁻¹ ist.

4. Reifen (1) für ein schweres Baufahrzeug nach einem der Ansprüche 1 bis 3:
- wobei der Laufstreifen (2) eine Gesamt-Volumeneinkerbungsrate TE_{G} aufweist, die gleich dem Verhältnis zwischen dem Gesamtvolumen V_{D} der Ausschnitte (3, 4, 5) und der Summe des Gesamtvolumens V_{D} der Ausschnitte (3, 4, 5) und des Gesamtvolumens V_{R} der Reliefelemente (6), die von diesen Ausschnitten begrenzt sind, ist,
- wobei die Gesamt-Volumeneinkerbungsrate TE_{G} gleich der Summe einer Längs-Volumeneinkerbungsrate TE_{X} und einer Quer-Volumeneinkerbungsrate TE_{Y} ist,
- wobei die Längs-Volumeneinkerbungsrate TE_{X} gleich dem Verhältnis zwischen dem Gesamtvolumen V_{DX} der Längsausschnitte vom Umfangsfurchentyp (3) und der Summe des Gesamtvolumens V_{D} der Ausschnitte (3, 4, 5) und des Gesamtvolumens V_{R} der Reliefelemente (6), die von diesen Ausschnitten begrenzt sind, ist,
- wobei die Quer-Volumeneinkerbungsrate TE_{Y} gleich dem Verhältnis zwischen dem Gesamtvolumen V_{DY} der Querausschnitte vom Einschnitts- (4) und Rillentyp (5) und der Summe des Gesamtvolumens V_{D} der Ausschnitte (3, 4, 5) und des Gesamtvolumens V_{R} der Reliefelemente (6), die von diesen Ausschnitten begrenzt sind, ist,
wobei die Gesamt-Volumeneinkerbungsrate TE_{G} mindestens gleich 8 % und höchstens gleich 17 %, vorzugsweise höchstens gleich 15 % ist, wobei die Längs-Volumeneinkerbungsrate TE_{X} mindestens gleich dem 0,25-fachen und höchstens gleich dem 0,50-fachen der Gesamt-Volumeneinkerbungsrate TE_{G} ist, und wobei die Quer-Volumeneinkerbungsrate TE_{Y} mindestens gleich dem 0,50-fachen und höchstens gleich dem 0,75-fachen der Gesamt-Volumeneinkerbungsrate TE_{G} ist.

5. Reifen (1) für ein schweres Baufahrzeug nach einem der Ansprüche 1 bis 4:
- der Laufstreifen (2) umfassend einen Mittelabschnitt (22) mit einer axialen Breite W_{C}, die mindestens gleich 50 % und höchstens gleich 80 % der axialen Breite W_{T} ist, und zwei Seitenabschnitte (23, 24), die jeweils axial beiderseits des Mittelabschnitts (22) positioniert sind und jeweils eine axiale Breite W_{S} aufweisen, die mindestens gleich 10 % und höchstens gleich 25 % der axialen Breite W_{T} ist,
- wobei der Mittelabschnitt (22) und jeder Seitenabschnitt (23, 24) jeweils eine Mittel-Volumeneinkerbungsrate TE_{C} und eine Seiten-Volumeneinkerbungsrate TE_{S} aufweisen,
- wobei die Mittel-Volumeneinkerbungsrate TE_{C} gleich dem Verhältnis zwischen dem Gesamtvolumen V_{DC} der Ausschnitte (3, 4, 5) des Mittelabschnitts (22) und der Summe des Gesamtvolumens V_{DC} der Ausschnitte (3, 4, 5) des Mittelabschnitts (22) und des Gesamtvolumens V_{RC} der Reliefelemente (6) des Mittelabschnitts (2), die von diesen Ausschnitten begrenzt sind, ist,
- wobei die Seiten-Volumeneinkerbungsrate TE_{S} gleich dem Verhältnis zwischen dem Gesamtvolumen V_{DS} der Ausschnitte (3, 4, 5) des Seitenabschnitts (23, 24) und der Summe des Gesamtvolumens V_{DS} der Ausschnitte (3, 4, 5) des Seitenabschnitts (23, 24) und des Gesamtvolumens V_{RS} der Reliefelemente (6) des Seitenabschnitts (23, 24), die von diesen Ausschnitten begrenzt sind, ist,
wobei die Mittel-Volumeneinkerbungsrate TE_{C} mindestens gleich 8 % und höchstens gleich 13 % ist und wobei die Seiten-Volumeneinkerbungsrate TE_{S} mindestens gleich 19 % und höchstens gleich 25 % ist.

6. Reifen (1) für ein schweres Baufahrzeug nach einem der Ansprüche 1 bis 5:
- der Laufstreifen (2) umfassend mindestens zwei Umfangsfurchen (3), die axial beiderseits einer Äquatorialebene (XZ) positioniert sind, die durch die Mitte des Laufstreifens und senkrecht zur Rotationsachse (YY') des Reifens verläuft,
- wobei sich jede Umfangsfurche (3) axial zwischen zwei Flächen, die im Wesentlichen in Umfangsrichtung verlaufen (31, 32), ausgehend von der Lauffläche (21) radial nach innen bis zu einer Bodenfläche (33) und in Umfangsrichtung über den gesamten Umfang des Reifens erstreckt,
- wobei jede Umfangsfurche (3) axial bezogen auf die Äquatorialebene (XZ) in einem axialen Abstand L positioniert ist, eine axiale Breite W aufweist, die zwischen den zwei Flächen gemessen wird, die im Wesentlichen in Umfangsrichtung verlaufen (31, 32), und eine radiale Tiefe H, die zwischen der Lauffläche (21) und der Bodenfläche (33) gemessen wird, wobei die radiale Tiefe H mindestens gleich 70 % der radialen Dicke H_{T} und höchstens gleich der radialen Dicke H_{T} ist, wobei jede Umfangsfurche (3) eine axiale Breite W und eine radiale Tiefe H aufweist, so dass das Verhältnis W/H mindestens gleich 0,06 ist, wobei der axiale Abstand C zwischen zwei aufeinanderfolgenden Umfangsfurchen (3) mindestens gleich 12 % und höchstens gleich 21 % der axialen Breite W_{T} des Laufstreifens ist, und wobei jede der Umfangsfurchen (3), die axial am weitesten außen gelegen sind, axial bezogen auf die Äquatorialebene (XZ) in einem axialen Abstand L_{E} positioniert ist, der mindestens gleich 25 % der axialen Breite W_{T} des Laufstreifens ist.

7. Reifen (1) für ein schweres Baufahrzeug nach Anspruch 6, wobei das Verhältnis W/H höchstens gleich 0,15 ist.

8. Reifen (1) für ein schweres Baufahrzeug nach einem der Ansprüche 6 oder 7, wobei der axiale Abstand L_{E} mindestens gleich 30 %, vorzugsweise mindestens gleich 35 % der axialen Breite W_{T} des Laufstreifens ist.

9. Reifen (1) für ein schweres Baufahrzeug nach einem der Ansprüche 6 bis 8, wobei der axiale Abstand L_{E} höchstens gleich 40 % der axialen Breite W_{T} des Laufstreifens ist.

10. Reifen (1) für ein schweres Baufahrzeug nach einem der Ansprüche 6 bis 9, wobei der axiale Abstand C zwischen zwei aufeinanderfolgenden Umfangsfurchen (3) mindestens gleich 150 % und höchstens gleich 200 % der radialen Dicke H_{T} ist.

11. Reifen (1) für ein schweres Baufahrzeug nach einem der Ansprüche 1 bis 10, wobei der Laufstreifen (2) mindestens vier Umfangsfurchen (3), vorzugsweise mindestens fünf Umfangsfurchen (3) umfasst.

12. Reifen (1) für ein schweres Baufahrzeug nach einem der Ansprüche 1 bis 11, wobei der Laufstreifen (2) höchstens acht Umfangsfurchen (3) umfasst.

13. Reifen (1) für ein schweres Baufahrzeug nach einem der Ansprüche 1 bis 12,
- der Laufstreifen (2) umfassend einen Mittelabschnitt (22) mit einer axialen Breite W_{C}, die mindestens gleich 50 % und höchstens gleich 80 % der axialen Breite W_{T} ist, und zwei Seitenabschnitte (23, 24), die jeweils axial beiderseits des Mittelabschnitts (22) positioniert sind und jeweils eine axiale Breite W_{S} aufweisen, die mindestens gleich 10 % und höchstens gleich 25 % der axialen Breite W_{T} ist,
- wobei der Laufstreifen (2) so beschaffen ist, dass der Mittelabschnitt (22) Quereinschnitte (4) umfasst, die in die Umfangsfurchen (3) münden,
- wobei diese Quereinschnitte (4) eine radiale Tiefe H1 aufweisen, die mindestens gleich 70 % der radialen Dicke H_{T} ist, und Reliefelemente (6) einer Höhe gleich der radialen Tiefe H1 der Quereinschnitte und einer Umfangslänge B1 gleich dem mittleren Abstand zwischen zwei aufeinanderfolgenden Quereinschnitten (4) begrenzen, wobei für alle Reliefelemente (6), die von zwei aufeinanderfolgenden Quereinschnitten (4) des Mittelabschnitts (22) begrenzt sind, das Verhältnis H1/B1 mindestens gleich 0,5 und höchstens gleich 2,5 ist.

14. Reifen (1) für ein schweres Baufahrzeug nach einem der Ansprüche 1 bis 13,
- der Laufstreifen (2) umfassend einen Mittelabschnitt (22) mit einer axialen Breite W_{C}, die mindestens gleich 50 % und höchstens gleich 80 % der axialen Breite W_{T} ist, und zwei Seitenabschnitte (23, 24), die jeweils axial beiderseits des Mittelabschnitts (22) positioniert sind und jeweils eine axiale Breite W_{S} aufweisen, die mindestens gleich 10 % und höchstens gleich 25 % der axialen Breite W_{T} ist,
- wobei der Laufstreifen (2) so beschaffen ist, dass mindestens ein Seitenabschnitt (23, 24) Querausschnitte (4, 5) vom Umfangsfurchen- (4) oder Querrillentyp (5) umfasst, die auf einer Seite in eine Umfangsfurche (3) und auf der anderen in ein axiales Ende des Laufstreifens (2) münden,
- wobei diese Querausschnitte (4, 5) eine radiale Tiefe H2 aufweisen, die mindestens gleich 70 % der radialen Dicke H_{T} ist, und Reliefelemente (6) einer Höhe gleich der radialen Tiefe H2 der Querausschnitte und einer Umfangslänge B2 gleich dem mittleren Abstand zwischen zwei aufeinanderfolgenden Querausschnitten (4) begrenzen,
wobei für alle Reliefelemente (6), die von zwei aufeinanderfolgenden Querausschnitten (4, 5) mindestens eines Seitenabschnitts (23, 24) begrenzt sind, das Verhältnis H2/B2 mindestens gleich 0,5 und höchstens gleich 2,5 ist.

15. Reifen (1) für ein schweres Baufahrzeug nach Anspruch 14, wobei mindestens ein Seitenabschnitt (23, 24) einen Wechsel von Quereinschnitten (4) und Querrillen (5) umfasst, so dass jedes Reliefelement (6) von einem Quereinschnitt (4) und einer Querrille (5) begrenzt ist, die aufeinander folgen.

## Claims

1. Tyre (1) for a heavy-duty vehicle of civil engineering type comprising a tread (2), intended to come into contact with the ground via a tread surface (21):
- the tread (2) having an axial width W_{T} and a radial thickness H_{T} at least equal to 70 mm,
- the tread (2) comprising cuts (3, 4, 5) distributed, in a circumferential direction (XX') of the tyre, among circumferential grooves (3) and, in an axial direction (YY') of the tyre, transverse sipes (4) and transverse grooves (5),
- the cuts (3, 4, 5) delimiting elements in relief (6),
- each cut (3, 4, 5) being delimited by two faces (31, 32; 41, 42; 51, 52) facing one another and each face (31, 32; 41, 42; 51, 52) intersecting the tread surface (21) along an edge corner (311, 321; 411, 421; 511, 521),
- for each cut (3, 4, 5), delimited in the tread surface (21) by two edge corners (311, 321; 411, 421; 511, 521), only one of these two edge corners being an effective edge corner, namely with a significant indentation effect with respect to the ground in terms of grip, for a given type of loading of the tread,
- the tread (2) having a longitudinal edge corners ratio TA_{X} and a transverse edge corners ratio TA_{Y},
- the longitudinal edge corners ratio TA_{X} being equal to the ratio L_{X}/S between the sum L_{X} of the projections, onto the circumferential direction (XX'), of the effective edge corner lengths, contained in an elementary tread surface portion of surface area S, and the surface area S,
- the transverse edge corners ratio TAy being equal to the ratio Ly/S between the sum Ly of the projections, onto the axial direction (YY'), of the effective edge corner lengths,
contained in an elementary tread surface portion of surface area S, and the surface area S, **characterized in that** the longitudinal edge corners ratio TA_{X} is at least equal to 4 m⁻¹ and **in that** the transverse edge corners ratio TAy is at least equal to 6 m⁻¹.

2. Tyre (1) for a heavy-duty vehicle of civil engineering type according to Claim 1, in **which** the transverse edge corners ratio TA_{Y} is at least equal to 8 m⁻¹, preferably at least equal to 10 m⁻¹.

3. Tyre (1) for a heavy-duty vehicle of civil engineering type according to one of Claims 1 or 2, **in which** the sum of the longitudinal edge corners ratio TA_{X} and of the transverse edge corners ratio TA_{Y} is at least equal to 12 m⁻¹, preferably at least equal to 14 m⁻¹.

4. Tyre (1) for a heavy-duty vehicle of civil engineering type according to any one of Claims 1 to 3:
- the tread (2) having an overall volume voids ratio TE_{G} equal to the ratio between the total volume V_{D} of the cuts (3, 4, 5) and the sum of the total volume V_{D} of the cuts (3, 4, 5) and of the total volume V_{R} of the elements in relief (6) which are delimited by these cuts,
- the overall volume voids ratio TE_{G} being equal to the sum of a longitudinal volume voids ratio TE_{X} and of a transverse volume voids ratio TE_{Y},
- the longitudinal volume voids ratio TE_{X} being equal to the ratio between the total volume V_{DX} of the longitudinal cuts, of circumferential groove type (3), and the sum of the total volume V_{D} of the cuts (3, 4, 5) and of the total volume V_{R} of the elements in relief (6) delimited by these cuts,
- the transverse volume voids ratio TE_{Y} being equal to the ratio between the total volume V_{DY} of the transverse cuts, of sipe (4) and groove (5) type, and the sum of the total volume V_{D} of the cuts (3, 4, 5) and of the total volume V_{R} of the elements in relief (6) delimited by these cuts,
**in which** the overall volume voids ratio TE_{G} is at least equal to 8% and at most equal to 17%, preferably at most equal to 15%, **in which** the longitudinal volume voids ratio TE_{X} is at least equal to 0.25 times and at most equal to 0.50 times the overall volume voids ratio TE_{G} **and in which** the transverse volume voids ratio TEy is at least equal to 0.50 times and at most equal to 0.75 times the overall volume voids ratio TE_{G}.

5. Tyre (1) for a heavy-duty vehicle of civil engineering type according to any one of Claims 1 to 4:
- the tread (2) comprising a middle part (22) having an axial width W_{C} at least equal to 50% and at most equal to 80% of the axial width W_{T}, and two lateral portions (23, 24), respectively positioned axially on either side of the middle part (22), and each having an axial width Ws at least equal to 10% and at most equal to 25% of the axial width W_{T},
- the middle portion (2) and each lateral portion (23, 24) having a middle volume voids ratio TE_{C} and a lateral volume voids ratio TE_{S}, respectively,
- the middle volume voids ratio TE_{C} being equal to the ratio between the total volume V_{DC} of the cuts (3, 4, 5) in the middle portion (22) and the sum of the total volume V_{DC} of the cuts (3, 4, 5) in the middle portion (22) and of the total volume V_{RC} of the elements in relief (6) of the middle portion (2) which are delimited by these cuts,
- the lateral volume voids ratio TE_{S} being equal to the ratio between the total volume V_{DS} of the cuts (3, 4, 5) in the lateral portion (23, 24) and the sum of the total volume V_{DS} of the cuts (3, 4, 5) in the lateral portion (23, 24) and of the total volume V_{RS} of the elements in relief (6) of the lateral portion (23, 24) which are delimited by these cuts,
**in which** the middle volume voids ratio TE_{C} is at least equal to 8% and at most equal to 13% **and in which** the lateral volume voids ratio TE_{S} is at least equal to 19% and at most equal to 25%.

6. Tyre (1) for a heavy-duty vehicle of civil engineering type according to any one of Claims 1 to 5:
- the tread (2) comprising at least two circumferential grooves (3), positioned axially one on each side of an equatorial plane (XZ) passing through the middle of the tread and perpendicular to the axis of rotation (YY') of the tyre,
- each circumferential groove (3) extending axially between two substantially circumferential faces (31, 32), radially towards the inside from the tread surface (21) as far as a bottom face (33) and circumferentially around the entire circumference of the tyre,
- each circumferential groove (3) being axially positioned with respect to the equatorial plane (XZ) at an axial distance L, having an axial width W, measured between the two substantially circumferential faces (31, 32), and a radial depth H, measured between the tread surface (21) and the bottom face (33), the radial depth H being at least equal to 70% of the radial thickness H_{T} and at most equal to the radial thickness H_{T},
**in which** each circumferential groove (3) has an axial width W and a radial depth H, such that the ratio W/H is at least equal to 0.06, **in which** the axial distance C between two consecutive circumferential grooves (3) is at least equal to 12% and at most equal to 21% of the axial width W_{T} of the tread, **and in which** each of the axially outermost circumferential grooves (3) is positioned axially, with respect to the equatorial plane (XZ), at an axial distance L_{E} at least equal to 25% of the axial width W_{T} of the tread.

7. Tyre (1) for a heavy-duty vehicle of civil engineering type according to Claim 6, **in which** the ratio W/H is at most equal to 0.15.

8. Tyre (1) for a heavy-duty vehicle of civil engineering type according to one of Claims 6 and 7 **in which** the axial distance L_{E} is at least equal to 30%, preferably at least equal to 35%, of the axial width W_{T} of the tread.

9. Tyre (1) for a heavy-duty vehicle of civil engineering type according to any one of Claims 6 to 8, **in which** the axial distance L_{E} is at most equal to 40% of the axial width W_{T} of the tread.

10. Tyre (1) for a heavy-duty vehicle of civil engineering type according to any one of Claims 6 to 9, **in which** the axial distance C between two consecutive circumferential grooves (3) is at least equal to 150% and at most equal to 200% of the radial thickness H_{T}.

11. Tyre (1) for a heavy-duty vehicle of civil engineering type according to any one of Claims 1 to 10, **in which** the tread (2) comprises at least four circumferential grooves (3), preferably at least five circumferential grooves (3).

12. Tyre (1) for a heavy-duty vehicle of civil engineering type according to any one of Claims 1 to 11, **in which** the tread (2) comprises at most eight circumferential grooves (3).

13. Tyre (1) for a heavy-duty vehicle of civil engineering type according to any one of Claims 1 to 12,
- the tread (2) comprising a middle part (22) having an axial width W_{C} at least equal to 50% and at most equal to 80% of the axial width W_{T}, and two lateral portions (23, 24), respectively positioned axially on either side of the middle part (22), and each having an axial width Ws at least equal to 10% and at most equal to 25% of the total axial W_{T},
- the tread (2) being such that the middle portion (22) comprises transverse sipes (4) opening into the circumferential grooves (3),
- these transverse sipes (4) having a radial depth H1 at least equal to 70% of the radial thickness H_{T} and delimiting elements in relief (6) of a height equal to the radial depth H1 of the said transverse sipes and of circumferential length B1 equal to the mean distance between two consecutive transverse sipes (4),
**in which,** for all the elements in relief (6) delimited by two consecutive transverse sipes (4) of the middle portion (22), the ratio H1/B1 is at least equal to 0.5 and at most equal to 2.5.

14. Tyre (1) for a heavy-duty vehicle of civil engineering type according to any one of Claims 1 to 13,
- the tread (2) comprising a middle part (22) having an axial width W_{C} at least equal to 50% and at most equal to 80% of the axial width W_{T}, and two lateral portions (23, 24), respectively positioned axially on either side of the middle part (22), and each having an axial width W_{S} at least equal to 10% and at most equal to 25% of the axial width W_{T},
- the tread (2) being such that at least a lateral portion (23, 24) comprises transverse cuts (4, 5), of transverse sipe (4) or transverse groove (5) type, opening on one side into a circumferential groove (3) and on the other side into an axial end of the tread (2),
- these transverse cuts (4, 5) having a radial depth H2 at least equal to 70% of the radial thickness H_{T} and delimiting elements in relief (6) of a height equal to the radial depth H2 of the said transverse cuts and of circumferential length B2 equal to the mean distance between two consecutive transverse cuts (4),
**in which,** for all the elements in relief (6) delimited by two consecutive transverse cuts (4, 5) of at least one lateral portion (23, 24), the ratio H2/B2 is at least equal to 0.5 and at most equal to 2.5.

15. Tyre (1) for a heavy-duty vehicle of civil engineering type according to Claim 14, **in which** at least one lateral portion (23, 24) comprises an alternation of transverse sipes (4) and of transverse grooves (5) such that any element in relief (6) is delimited by a transverse sipe (4) and a transverse groove (5) which are consecutive.
